# FASCICULE DE BREVET EUROPEEN

(11) **EP 3 599 629 B1**
(45) Date de publication et mention de la délivrance du brevet: **15.03.2023**
(21) Numéro de dépôt: 19188043.4
(22) Date de dépôt: 24.07.2019
(51) Int. Cl.: H01H 33/66, H01H 31/00, B60L 5/24, B60L 3/04, H01H 33/662

(54) **DISPOSITIF DE DISJONCTION ÉLECTRIQUE POUR VÉHICULE ET VÉHICULE ASSOCIÉ**
ELEKTRISCHE TRENNSCHALTERVORRICHTUNG FÜR FAHRZEUG UND ENTSPRECHENDES FAHRZEUG
SHUT-OFF DEVICE FOR A VEHICLE AND ASSOCIATED VEHICLE

(30) Priorité: 26.07.2018 FR 1856977
(43) Date de publication de la demande: 29.01.2020
(73) Titulaire: ALSTOM Transport Technologies, 93400 Saint-Ouen (FR)
(72) Inventeur: QUENTIN, Nicolas, 65420 IBOS (FR); DUFFAU, Laurent, 65360 ARCIZAC-ADOUR (FR); TAINE, Antoine, 65600 SEMEAC (FR)
(74) Mandataire: Lavoix

(56) Documents cités:
- EP-A1- 3 026 689
- CN-A- 108 172 453
- CN-A- 108 173 159
- JP-A- H02 215 022

## Description

La présente invention concerne un véhicule ferroviaire comprenant un dispositif de disjonction électrique selon le préambule de la revendication 1.

Un tel dispositif est par exemple placé dans un circuit électrique d'alimentation en électricité d'un véhicule ferroviaire afin de protéger ledit circuit électrique d'alimentation en cas de court-circuit.

Généralement, le réseau électrique d'un véhicule ferroviaire est connecté à une ligne électrique via un pantographe et le dispositif de disjonction électrique joue alors le rôle d'interrupteur et d'organe de protection électrique. En cas de surcharge de courant, le dispositif de disjonction électrique ouvre le circuit électrique et empêche le courant de circuler de la ligne électrique jusqu'au réseau électrique du véhicule ferroviaire sans avoir à baisser le pantographe pour défaire le contact entre le pantographe et la ligne électrique.

Le dispositif de disjonction comprend en général un interrupteur à vide à l'intérieur duquel s'étendent un premier contact électrique et un deuxième contact électrique mobile par rapport au premier contact électrique. Les premier et deuxième contacts électriques sont respectivement connectés au réseau électrique du véhicule et au pantographe. Lors de la mise sous tension du circuit électrique, le deuxième contact électrique est déplacé au moyen d'un module d'entrainement jusqu'à être en contact avec le premier contact électrique pour permettre le passage du courant de la ligne électrique vers le réseau électrique du véhicule ferroviaire.

Généralement, le dispositif est en partie intégré à la toiture du véhicule ferroviaire en s'étendant perpendiculairement à la toiture. Le dispositif de disjonction s'étend par exemple au travers d'une ouverture ménagée dans la toiture. Malgré cela, le dispositif dépasse souvent de la toiture sur une hauteur de l'ordre de 550 millimètres, ce qui a une incidence négative sur l'aérodynamisme du véhicule ferroviaire.

Pour diminuer cette hauteur, il est connu de placer le dispositif de disjonction de sorte à ce qu'il s'étende sensiblement parallèlement au toit du véhicule ferroviaire.

Le document EP 3 026 689 divulgue un véhicule selon le préambule de la revendication 1 avec un disjoncteur à haute tension disposé parallèlement à la toiture d'un wagon de train et comprenant un boitier sous vide dans lequel se trouvent au moins deux contacts électriques, un module d'entrainement couplé à un des contacts électriques et un actionneur permettant la mise en contact des contacts électriques.

Un tel dispositif ne donne cependant pas entière satisfaction. En effet, cette solution nécessite l'utilisation de connectiques isolées haute tension onéreuses et qui ne permettent pas d'ajouter des fonctions complémentaires au dispositif.

Un des buts de l'invention est de proposer un dispositif de disjonction électrique pour véhicule ferroviaire présentant une hauteur réduite, tout en permettant l'ajout de fonctionnalités de manière simple et peu onéreuse.

A cet effet, l'invention a pour objet un véhicule selon la revendication 1.

Un tel agencement permet de réduire l'encombrement du dispositif de disjonction et d'ajouter facilement au dispositif de disjonction des fonctionnalités supplémentaires, comme un dispositif de mise à terre par exemple.

Le véhicule selon l'invention peut comprendre l'une ou plusieurs des caractéristiques des revendications 2 à 10, prise(s) isolément ou suivant toute combinaison techniquement possible.

D'autres aspects et avantages de l'invention apparaîtront à la lecture de la description qui va suivre, donnée uniquement à titre d'exemple, et faite en se référant aux dessins annexés, sur lesquels :
- la figure 1 est une vue schématique en coupe d'un premier dispositif de disjonction d'un véhicule ferroviaire selon l'invention ;
- la figure 2 est une vue schématique de côté d'un dispositif analogue à celui de la figure 1 et comprenant un dispositif de sectionnement additionnel ;
- les figures 3 et 4 sont des vues schématiques analogues à celle de la figure 2, illustrant un mode de réalisation particulier du dispositif de disjonction d'un véhicule ferroviaire selon l'invention comprenant un dispositif de mise à terre respectivement dans la position de service et dans la position de mise à terre ;
- les figures 5 et 6 sont des vues schématiques analogues à celle de la figure 1 illustrant des modes de réalisation particuliers du dispositif de disjonction d'un véhicule ferroviaire selon l'invention.

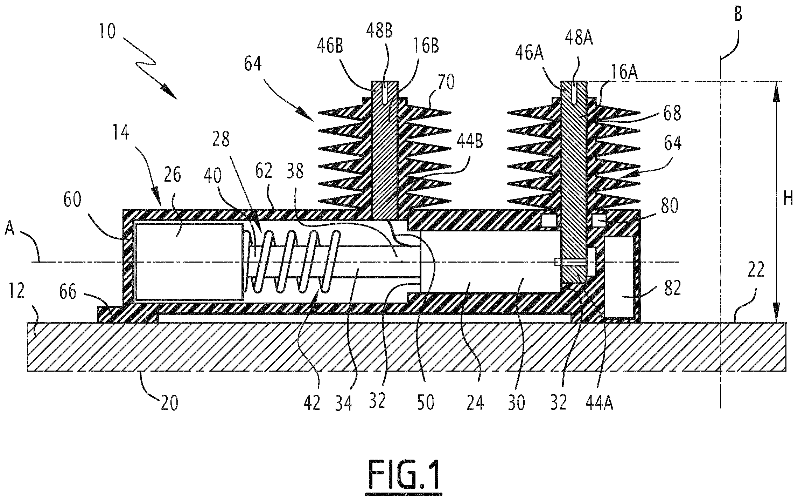

Un premier dispositif de disjonction électrique 10 d'un véhicule ferroviaire selon l'invention est représenté sur la figure 1.

Le dispositif de disjonction 10 est destiné à être monté sur un véhicule, notamment un véhicule ferroviaire, en particulier un train, un tramway, un métro ou autre. De façon classique, le véhicule ferroviaire comprend notamment un toit, un pantographe et un réseau électrique haute tension.

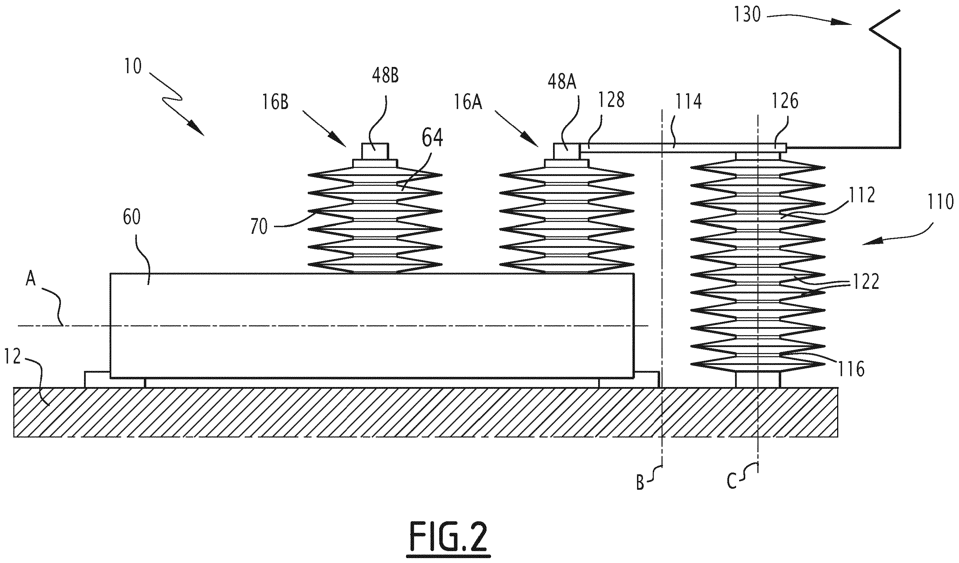

En référence aux figures 1 et 2, le dispositif 10 comporte un support 12, un disjoncteur 14, une première connexion électrique 16A et une deuxième connexion électrique 16B.

Le support 12 s'étend sensiblement selon un plan longitudinal. Le support 12 présente une surface intérieure 20 et une surface extérieure 22, la surface extérieure 22 étant de préférence sensiblement parallèle à la surface intérieure 20.

Dans le cas du dispositif de disjonction 10 représenté sur la figure 1, le support 12 est formé par au moins une partie du toit du véhicule ferroviaire. En variante, le support 12 est formé d'une plaque fixée à au moins une partie du toit du véhicule ferroviaire. Selon ces modes de réalisation, le plan longitudinal est donc formé par le plan dans lequel s'étend le toit ou est sensiblement parallèle à ce plan.

Le disjoncteur 14 est disposé sur le support 12, du côté de la surface extérieure 22, et s'étend sensiblement parallèlement au plan longitudinal du support 12. Par parallèlement, on entend que le disjoncteur 14 s'étend principalement selon un axe principal, dit axe longitudinal A ou direction longitudinale A comme cela sera décrit ultérieurement, cet axe longitudinal A étant sensiblement parallèle au plan longitudinal du support 12.

Le disjoncteur 14 comprend un interrupteur à vide 24, un actionneur 26 et un module d'entrainement 28 reliant l'interrupteur à vide 24 à l'actionneur 26.

L'interrupteur à vide 24 comprend un premier contact électrique, un deuxième contact électrique et une ampoule à vide à l'intérieur de laquelle s'étendent le premier contact électrique et le deuxième contact électrique (non représentés). Comme connu en soi, l'utilisation d'un interrupteur à vide 24 permet de commuter des courants et d'isoler un circuit sous une tension élevée avec des distances inter-contact faibles, le vide jouant le rôle d'isolant électrique. L'interrupteur à vide 24 s'étend sensiblement parallèlement au plan longitudinal du support 12.

L'interrupteur à vide 24 est délimité par au moins une paroi longitudinale 30 de forme cylindrique s'étendant selon l'axe longitudinal A et deux parois transversales 32, s'étendant de part et d'autre de la paroi longitudinale 30 selon la direction longitudinale A.

Chaque contact électrique comprend une portion de contact et une portion de connexion. Les portions de contact sont situées à l'intérieur de l'interrupteur à vide 24 et les portions de connexion du premier contact électrique et du deuxième contact électrique traversent chacune une des parois transversales 32 de l'interrupteur à vide 24 et s'étendent à l'extérieur de l'enceinte sous vide définie par les parois longitudinales 30 et transversales 32. Le deuxième contact électrique est mobile par rapport au premier contact électrique entre une position fermée, dans laquelle les contacts électriques sont en contact au niveau de leurs portions de contact pour permettre le passage du courant à travers le dispositif de disjonction 10, et une position ouverte, dans laquelle les contacts électriques sont éloignés l'un de l'autre pour interrompre le passage du courant à travers le dispositif de disjonction 10.

A cet effet, le deuxième contact électrique est par exemple monté coulissant suivant l'axe longitudinal A par rapport au premier contact électrique entre la position fermée et la position ouverte.

Le module d'entrainement 28 est situé à l'extérieur de l'interrupteur à vide 24 et comprend un dispositif d'entrainement 34.

Le dispositif d'entrainement 34 s'étend sensiblement suivant l'axe longitudinal A. Dans l'exemple représenté sur la figure 1, le dispositif d'entrainement 34 présente la forme d'une tige.

Le dispositif d'entrainement 34 assure une isolation électrique entre le deuxième contact électrique et l'actionneur 26 et est réalisé par exemple en matrice polymère renforcée ou en fibres de verre.

Le dispositif d'entrainement 34 est fixé au deuxième contact électrique au niveau de la portion de connexion dudit contact électrique.

Le dispositif d'entrainement 34 présente en outre une première extrémité 38 et une deuxième extrémité 40 opposée à la première extrémité 38 selon la direction longitudinale A.

Le dispositif d'entrainement 34 est raccordé au deuxième contact électrique coulissant au niveau de la première extrémité 38 et à l'actionneur 26 au niveau de la deuxième extrémité 40.

Le module d'entrainement 28 comporte au moins un organe de rappel 42 agencé pour exercer sur le deuxième contact électrique un effort de rappel de la position fermée vers la position ouverte.

Dans le dispositif représenté sur la figure 1, l'organe de rappel 42 est un ressort s'étendant selon l'axe longitudinal A.

Le module d'entrainement 28 relie donc l'interrupteur à vide 24 à l'actionneur 26 et permet le déplacement du deuxième contact électrique entre la position fermée et la position ouverte.

L'actionneur 26 agit à l'encontre de l'organe de rappel 42. L'actionneur 26 est agencé pour exercer une force opposée à la force exercée par l'organe de rappel 42 en maintenant le deuxième contact électrique dans la position fermée.

Dans l'exemple illustré sur la figure 1, l'actionneur 26 est un électroaimant. En variante, l'actionneur 26 est un vérin pneumatique ou un moteur électrique.

L'actionneur 26 est configuré pour entrainer le déplacement du dispositif d'entrainement 34 et ainsi le déplacement du deuxième contact électrique entre la position ouverte et la position fermée. L'actionneur 26 peut ainsi commander le passage du courant à l'intérieur de l'interrupteur à vide 24.

Dans un mode de réalisation particulier, l'actionneur 26 est équipé d'un module de réception (non représenté) pour recevoir des signaux de commande.

Le disjoncteur 14 s'étend entre le support 12 et les connexions électriques 16A, 16B sensiblement suivant la direction longitudinale A. Lorsque le véhicule ferroviaire sur lequel est disposé le dispositif de disjonction 10 circule sur des rails horizontaux, la direction longitudinale A est sensiblement horizontale.

Les connexions électriques 16A, 16B s'étendent ainsi d'un premier côté du disjoncteur 14 et le support 12 s'étend d'un deuxième côté du disjoncteur 14, opposé au premier côté, comme illustré sur les figures 1 à 6. En d'autres termes, les connexions électriques 16A, 16B et le support 12 s'étendent de part et d'autre du disjoncteur 14.

La première connexion électrique 16A et la deuxième connexion électrique 16B sont connectées à l'interrupteur à vide 24 et relient ledit interrupteur 24 à des contacts électriques extérieurs (non représentés sur la figure 1). Ces contacts électriques extérieurs font par exemple partie d'un pantographe et d'un réseau électrique haute tension, comme cela sera décrit ultérieurement.

La première connexion électrique 16A comporte une première extrémité 44A et une deuxième extrémité 46A.

La première extrémité 44A de la première connexion 16A est reliée à la portion de connexion du premier contact électrique.

La deuxième extrémité 46A de la première connexion 16A présente un connecteur électrique 48A destiné à être connecté à un contact électrique extérieur, par exemple à un pantographe.

La deuxième connexion électrique 16B comporte une première extrémité 44B et une deuxième extrémité 46B.

La première extrémité 44B de la deuxième connexion 16B est reliée à la portion de connexion du deuxième contact électrique, par exemple par un câble 50.

La deuxième extrémité 46B de la deuxième connexion 16B présente un connecteur électrique 48B destiné à être connecté à un contact électrique extérieur, par exemple au réseau électrique haute tension du véhicule ferroviaire.

Les connexions électriques 16A, 16B s'étendent chacune suivant une direction d'extension de sorte que la distance entre le connecteur électrique 48A et le support 12 est supérieure à la distance entre la première extrémité 44A et le support 12 et la distance entre le connecteur électrique 48B et le support 12 est supérieure à la distance entre la première extrémité 44B et le support 12. Les distances sont mesurées suivant une direction d'élévation B sensiblement normale au plan longitudinal du support 12. Lorsque le véhicule ferroviaire sur lequel est disposé le dispositif de disjonction 10 circule sur des rails horizontaux, la direction d'élévation B est sensiblement verticale.

Avantageusement, les connexions électriques 16A, 16B forment avec le support 12, en partant de la première extrémité 44A, 44B, un angle minimal α compris entre 45° et 100°, de préférence entre 70° et 90°.

Dans un premier mode de réalisation représenté sur la figure 1, les connexions électriques 16A, 16B s'étendent selon la direction d'élévation B, également appelée axe d'élévation B.

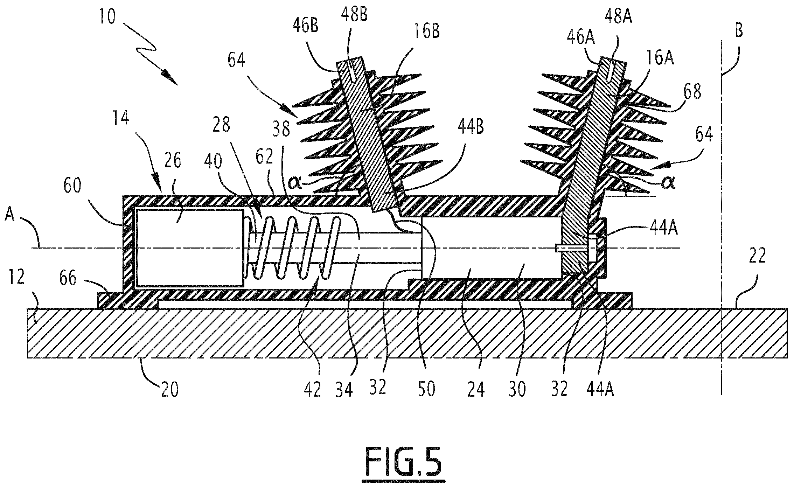

En variante, sur la figure 5, les connexions électriques 16A, 16B sont inclinées et forment avec le plan longitudinal du support 12 un angle α strictement inférieur à 90°.

Les connexions électriques 16A, 16B sont espacés l'une de l'autre d'une distance minimale mesurée selon l'axe longitudinal A supérieure à 200 mm.

Cette distance est agencée pour que l'isolation électrique entre la première connexion 16A et la deuxième connexion 16B soit assurée par l'air ambiant entre la première et la deuxième connexions 16A, 16B.

Dans le mode de réalisation représenté sur la figure 1, le dispositif de disjonction électrique 10 comprend en outre une enveloppe creuse 60 à l'intérieur de laquelle sont disposés le disjoncteur 14 et les connexions électriques 16A, 16B.

L'enveloppe creuse 60 comporte un boitier 62 et deux manchons 64.

Dans cet exemple, le boitier 62 a sensiblement une forme de parallélépipède rectangle. Le disjoncteur 14 est disposé à l'intérieur du boitier 62.

Le boitier 62 s'étend sensiblement parallèlement au support 12. Le boitier 62 présente une face inférieure en regard du support 12 et une face supérieure opposée à la face inférieure.

Le boitier 62 comporte au moins une embase 66 fixée sur le support 12, s'étendant sur la face inférieure du boitier 62. En variante, un fond du boitier 62 est disposé directement au contact du support 12 et fixé à celui-ci.

Les manchons 64 sont disposés sur le boitier 62 en s'étendant sensiblement suivant la direction d'extension des connexions électriques 16A, 16B. Les manchons 64 forment avec le support 12 un angle sensiblement égal à l'angle minimal α formé par les connexions électriques avec le support 12. Les manchons 64 sont disposés sur la face supérieure du boitier 62. Un tel agencement permet de réduire l'encombrement latéral du dispositif de disjonction électrique 10.

Les manchons 64 comprennent suivant la direction d'extension, une première extrémité en regard du boîtier 62 et du support 12 et une deuxième extrémité opposée au boitier 62 et au support 12. La distance, mesurée suivant la direction d'élévation B, entre chaque deuxième extrémité et le support 12 est supérieure à la distance entre la première extrémité correspondante et le support 12.

Dans l'exemple représenté sur la figure 1, les manchons 64 s'étendent sensiblement selon la direction d'élévation B.

En variante, sur la figure 5, les manchons 64 sont inclinés et forment avec le support 12 un angle α strictement inférieur à 90°.

De préférence, les manchons 64 sont montés sur le boitier de façon amovible. Par exemple, les manchons 64 présentent un filetage (non représenté) et sont insérés par vissage à l'intérieur d'ouvertures ménagées dans le boitier 62.

En variante, les manchons 64 sont venus de matière avec le boitier 62.

Les manchons 64 présentent chacun deux ouvertures à leurs extrémités, de sorte que chaque manchon 64 définit un alésage central délimité par une paroi externe 68 et débouchant d'un côté à l'intérieur du boitier 62 et de l'autre côté à l'air ambiant.

La paroi externe 68 présente une pluralité de nervures 70 annulaires circonférentielles s'étendant en saillie radialement sur la paroi externe 68. Les nervures 70 sont sensiblement parallèles entre elles.

Les nervures 70 limitent le risque de formation d'un arc électrique à la surface de la paroi externe 68 du manchon 64.

Les première et deuxième connexions électriques 16A, 16B s'étendent respectivement à l'intérieur d'un des manchons 64, dans ledit alésage central. Selon un mode de réalisation, l'alésage présente une forme sensiblement complémentaire de celle d'au moins une partie des connexions électriques 16A, 16B. Lorsque les manchons 64 sont montés de façon amovible sur le boitier 62, les connexions électriques 16A, 16B sont avantageusement amovibles et peuvent être déconnectées de l'interrupteur à vide 24. Il est ainsi possible de réaliser des opérations de maintenance directement sur les connexions 16A, 16B ou procéder à leur remplacement sans avoir besoin de démonter l'ensemble du dispositif de disjonction 10.

Chaque connexion électrique 16A, 16B s'étend à l'intérieur d'un manchon 64 de sorte que sa première extrémité 44A, 44B est située au niveau d'une première ouverture du manchon 64.

Chaque connexion 16A, 16B traverse une deuxième ouverture du manchon 64 de sorte que le connecteur électrique 48A, 48B s'étend en saillie en dehors du manchon 64, à l'opposé du disjoncteur 14. Cette disposition facilite le raccordement des barres ou câbles reliés aux connexions 16A, 16B, ainsi que le contrôle d'isolement de l'ampoule à vide.

L'enveloppe creuse 60 est réalisée en un matériau polymérique. Avantageusement, l'enveloppe creuse 60 est dépourvu de matériau métallique de sorte à n'assurer aucune conduction électrique.

De préférence, le matériau polymérique comprend au moins un polymère époxyde, aussi connu sous le nom de « polyépoxyde » ou de « polymère époxy ».

Par exemple, l'enveloppe creuse 60 est réalisée en une résine époxy cycloaliphatique pour une meilleure résistance aux contraintes climatiques extérieures.

L'ensemble formé par le disjoncteur 14 et les connexions électriques 16A, 16B présente une hauteur H inférieure à 450 millimètres, la hauteur H étant mesurée selon un axe normal au plan du support 12.

Plus précisément, la distance entre la surface extérieure 22 du support 12 et les extrémités les plus hautes des connecteurs électriques 48A, 48B est inférieure à 450 millimètres.

Avantageusement, le dispositif de disjonction 10 comporte en outre des modules de mesure permettant de mesurer certaines grandeurs physiques.

Le dispositif de disjonction 10 comporte par exemple un capteur de courant 80 et un capteur de tension 82, comme représentés sur la figure 1.

Dans cet exemple, le capteur de courant 80 est configuré pour mesurer l'intensité du courant traversant la première connexion 16A et le capteur de tension 82 est configuré pour mesurer la tension aux bornes de la dite première connexion 16A.

Selon un mode de réalisation représenté sur la figure 2, le dispositif de disjonction 10 comporte en outre un dispositif de sectionnement 110 additionnel.

Le dispositif de sectionnement 110 est disposé sur le support 12 et s'étend sensiblement perpendiculairement au plan du support 12. Le dispositif de sectionnement 110 s'étend par exemple selon un axe central C sensiblement parallèle à l'axe B.

Le dispositif de sectionnement 110 comprend un manchon 112 et un bras 114.

Le manchon 112 s'étend sensiblement selon l'axe central C.

Le manchon 112 comporte une paroi longitudinale 116 présentant sensiblement une symétrie de révolution selon l'axe central C.

Le manchon 112 comprend une pluralité de nervures 122 annulaires circonférentielles s'étendant en saillie radialement sur la paroi longitudinale 116. Les nervures 122 sont sensiblement parallèles entre elles et limitent le risque de formation d'un arc électrique à la surface de la paroi longitudinale 116 du manchon 112.

Le bras 114 comporte une tige conductrice qui s'étend selon une direction sensiblement parallèle à l'axe A.

Le bras 114 comporte une première extrémité 126 et une deuxième extrémité 128, la première extrémité 126 étant fixée au manchon 112 de manière à assurer une liaison pivot et à permettre la rotation du bras 114 autour de l'axe central C.

Le bras 114 est mobile en rotation autour de l'axe central C entre une position fermée et une position ouverte.

Dans la position fermée, la première extrémité 126 du bras 114 est reliée à un contact électrique extérieur et la deuxième extrémité 128 du bras 114 est en contact avec le connecteur électrique 48A de la première connexion électrique 16A.

Dans l'exemple représenté sur la figure 2, le contact électrique extérieur est un pantographe 130.

Dans la position ouverte, la deuxième extrémité 128 du bras 114 est éloignée du connecteur électrique 48A de sorte que la première connexion électrique 16A est isolée du contact électrique extérieur. Aucun courant électrique ne circule donc à l'intérieur de l'interrupteur à vide 24, et ce même si le deuxième contact électrique est en position fermée.

Le manchon 112 présente une hauteur mesurée selon l'axe central C sensiblement égale à la hauteur de l'ensemble formé par le disjoncteur 14 et les connexions électriques 16A, 16B, de sorte que le bras 114 est sensiblement parallèle au plan du support 12 en position fermée.

Le dispositif de sectionnement additionnel 110 renforce la sécurité du dispositif de disjonction électrique 10. Dans le cas par exemple d'une perte du vide à l'intérieur de l'interrupteur à vide 14, un arc électrique peut se former entre les contacts électriques et le passage du courant électrique entre la première connexion électrique 16A et la deuxième connexion électrique 16B n'est pas empêché. Grâce au dispositif de sectionnement 110 additionnel, même dans ce cas de figure, aucun courant ne circule entre les connexions électriques 16A, 16B et le dispositif de disjonction électrique 10 assure bien son rôle en empêchant le courant de circuler de la ligne électrique vers le réseau électrique du véhicule ferroviaire.

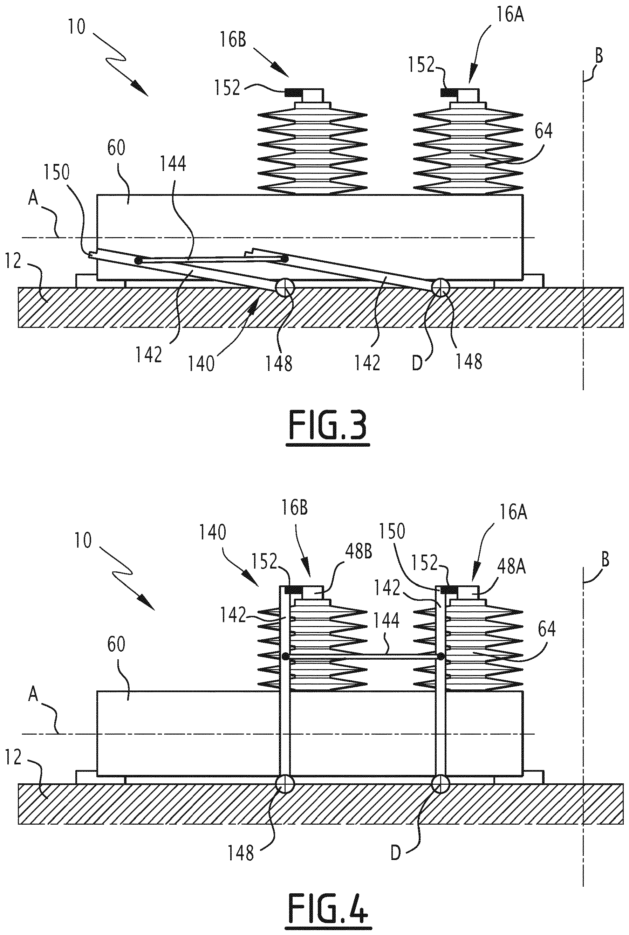

Dans un mode de réalisation particulier représenté schématiquement sur les figures 3 et 4, le dispositif de disjonction 10 comprend en outre un dispositif de mise à terre 140 mobile entre une position de service, représentée sur la figure 3, et une position de mise à terre, représentée sur la figure 4.

Dans la position de service, le dispositif de mise à terre 140 est éloigné des connexions 16A, 16B. Dans la position de mise à terre, au moins une partie du dispositif de mise à terre 140 est en contact avec au moins une des connexions 16A, 16B et le dispositif de disjonction 10 est alors mis à la terre.

Le dispositif de mise à terre 140 renforce la sécurité du dispositif de disjonction 10 et prévient notamment les risques d'électrocution chez un opérateur réalisant des opérations de maintenance sur ledit dispositif 10.

Le dispositif de mise à terre 140 comprend deux axes pivotants 142 liés entre eux par un bras transversal 144.

Le bras transversal 144 maintient les axes pivotants 142 sensiblement parallèles entre eux.

Le bras transversal 144 est monté sur chacun des axes pivotants 142 et s'étend selon une direction sensiblement parallèle au plan du support 12.

Chaque axe 142 présente une extrémité 148 située au niveau du support 12 et une extrémité 150 opposée à l'extrémité 148.

Chaque axe 142 est mobile en rotation entre une position de service et une position de mise à terre autour d'un axe D sensiblement perpendiculaire à l'axe A et sensiblement perpendiculaire à l'axe B.

Dans la position de service, représentée à la figure 3, les extrémités 150 des axes pivotants 142 sont à distance des connexions électriques 16A, 16B.

Dans la position de mise à terre, représentée à la figure 4, les extrémités 150 des axes pivotants 142 sont en contact avec les connexions 16A, 16B au niveau des connecteurs électriques 48A, 48B.

Avantageusement, les connecteurs électriques 48A, 48B comportent chacune un organe conducteur 152, comme un pion, une pince ou une connexion, configuré pour que chaque extrémité 150 d'un axe 142 soit respectivement en contact avec l'organe conducteur 152 lorsque que le dispositif de mise à terre 140 est dans la position de mise à terre.

Le dispositif de mise à terre 140 est actionnable au moyen d'un module de commande (non représenté). Dans les conditions normales de circulation d'un véhicule ferroviaire, le dispositif de disjonction 10 est dans la position fermée.

Du courant électrique circule dans une caténaire située au-dessus de la voie sur laquelle roule le véhicule ferroviaire. Le pantographe 130 capte le courant par frottement sur la caténaire et transmet ledit courant à la première extrémité 126 du bras 114 du dispositif de sectionnement 110. Le dispositif de mise à terre est dans la position de service.

Le bras 114 est dans la position fermée et le courant circule de la première extrémité 126 vers la deuxième extrémité 128 jusqu'au connecteur électrique 48A de la première connexion électrique 16A.

Le courant circule ensuite à l'intérieur de l'interrupteur à vide 24. L'actionneur 26 maintient le deuxième contact électrique en contact contre le premier contact électrique et le courant passe donc du premier contact électrique au deuxième contact électrique. Le courant électrique circule dans le deuxième contact électrique avant de rejoindre la deuxième connexion électrique 16B et d'atteindre le deuxième connecteur électrique 48B. Puis, le courant rejoint un contact électrique extérieur, par exemple le réseau électrique haute tension du véhicule ferroviaire.

En cas d'incident au niveau du circuit électrique, notamment dans le cas d'une surcharge de courant, le dispositif de disjonction 10 empêche la circulation du courant depuis la caténaire jusqu'au réseau électrique du véhicule ferroviaire.

L'actionneur 26 reçoit un signal de commande et cesse de maintenir le deuxième contact électrique dans la position fermée.

Le module d'entrainement 28 exerce une force de rappel qui déplace alors le deuxième contact électrique dans la position ouverte, à l'écart du premier contact électrique.

Le courant électrique ne circule donc plus entre les contacts électriques à l'intérieur de l'interrupteur à vide 24.

De plus, le dispositif de sectionnement 110 additionnel reçoit simultanément un signal de commande et le bras 114 pivote de la position fermée vers la position ouverte.

En variante, le dispositif de sectionnement ne reçoit un tel signal de commande qu'en cas de détection d'une anomalie au niveau de l'interrupteur à vide 24, comme une perte de vide à l'intérieur dudit interrupteur 24.

Lorsque le dispositif de disjonction 10 ne comporte pas de dispositif de sectionnement 110 additionnel, le pantographe 130 est directement connecté au connecteur électrique 48A de la première connexion électrique 16A et le courant circule donc directement du pantographe 130 à la première connexion 16A.

Dans le cas d'opérations de maintenance, le dispositif de disjonction 10 est dans la position ouverte. Pour plus de sécurité, le dispositif de mise à terre 140 peut être mis dans la position de mise à terre afin d'éviter qu'un courant résiduel ne blesse un opérateur travaillant sur ledit dispositif 10.

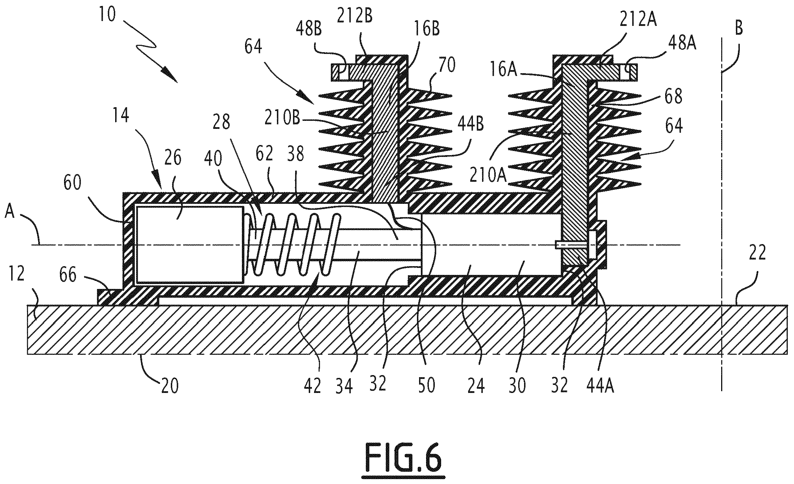

Selon un autre mode de réalisation représenté sur la figure 6, chaque connexion électrique 16A, 16B comprend en s'éloignant du support 12 et du disjoncteur 14, une première portion 210A, 210B et une deuxième portion 212A, 212B successives. La première portion 210A, 210B s'étend suivant la direction d'élévation B et la deuxième portion 212A, 212B s'étend suivant une direction sensiblement perpendiculaire à la première portion 210A, 210B, c'est-à-dire sensiblement suivant l'axe longitudinal A. Chaque connexion électrique 16A, 16B présente ainsi une forme coudée. Chaque deuxième portion 212A, 212B comprend le connecteur électrique 48A, 48B correspondant et chaque deuxième portion 212A, 212B s'étend suivant l'axe longitudinal A en partant de la première portion 210A, 210B correspondante dans une direction opposée à l'autre deuxième portion 212A, 212B de sorte que la distance mesurée suivant l'axe longitudinal A entre les premières portions 210A, 210B est inférieure à la distance mesurée suivant l'axe longitudinal A entre les connecteurs électriques 48A, 48B. En d'autres termes, les connexions électriques 16A, 16B sont sensiblement symétriques l'une de l'autre suivant un plan parallèle à la direction d'élévation B, les deuxièmes portions 212A, 212B s'éloignant l'une de l'autre. La réalisation de sortie latérale des connecteurs électriques 48A, 48B augmente les distances entre connexions 16A, 16B de potentiel différent.

Avantageusement les manchons 64 comprennent également deux portions correspondant aux première et seconde portions évoquées ci-dessus.

Le dispositif de disjonction électrique 10 selon l'invention propose un compromis entre une hauteur faible et l'ajout de fonctionnalités d'une manière simple et peu onéreuse.

Le disjoncteur 14 se situe au plus près du toit du véhicule ferroviaire, ce qui limite l'encombrement du dispositif 10 ainsi que la perte d'aérodynamisme du véhicule ferroviaire. En outre, le dispositif de disjonction 10 est fixé sur le toit du véhicule ferroviaire sans y être intégré, ce qui évite la découpe du toit ou toute autre opération lourde pour installer ledit dispositif 10.

De plus, la disposition des connexions 16A, 16B selon une direction sensiblement normale au plan du support 12 permet d'avoir des connecteurs électriques 48A, 48B facilement accessibles et ainsi d'ajouter des fonctions complémentaires comme un dispositif de mise à terre 140 ou un dispositif de sectionnement 110 additionnel.

Enfin, les connexions 16A, 16B sont amovibles, ce qui facilite leur montage et leur démontage lors d'opérations de maintenance ou pour intégrer des outils de mesures, comme les capteurs 80, 82.

Lorsque le dispositif de disjonction 10 ne comporte pas de dispositif de sectionnement 110 additionnel, le pantographe 130 est directement connecté au connecteur électrique 48A de la première connexion électrique 16A et le courant circule donc directement du pantographe 130 à la première connexion 16A.

Dans le cas d'opérations de maintenance, le dispositif de disjonction 10 est dans la position ouverte. Pour plus de sécurité, le dispositif de mise à terre 140 peut être mis dans la position de mise à terre afin d'éviter qu'un courant résiduel ne blesse un opérateur travaillant sur ledit dispositif 10.

Selon un autre mode de réalisation représenté sur la figure 6, chaque connexion électrique 16A, 16B comprend en s'éloignant du support 12 et du disjoncteur 14, une première portion 210A, 210B et une deuxième portion 212A, 212B successives. La première portion 210A, 210B s'étend suivant la direction d'élévation B et la deuxième portion 212A, 212B s'étend suivant une direction sensiblement perpendiculaire à la première portion 210A, 210B, c'est-à-dire sensiblement suivant l'axe longitudinal A. Chaque connexion électrique 16A, 16B présente ainsi une forme coudée. Chaque deuxième portion 212A, 212B comprend le connecteur électrique 48A, 48B correspondant et chaque deuxième portion 212A, 212B s'étend suivant l'axe longitudinal A en partant de la première portion 210A, 210B correspondante dans une direction opposée à l'autre deuxième portion 212A, 212B de sorte que la distance mesurée suivant l'axe longitudinal A entre les premières portions 210A, 210B est inférieure à la distance mesurée suivant l'axe longitudinal A entre les connecteurs électriques 48A, 48B. En d'autres termes, les connexions électriques 16A, 16B sont sensiblement symétriques l'une de l'autre suivant un plan parallèle à la direction d'élévation B, les deuxièmes portions 212A, 212B s'éloignant l'une de l'autre. La réalisation de sortie latérale des connecteurs électriques 48A, 48B augmente les distances entre connexions 16A, 16B de potentiel différent.

Avantageusement les manchons 64 comprennent également deux portions correspondant aux première et seconde portions évoquées ci-dessus.

Le dispositif de disjonction électrique 10 selon l'invention propose un compromis entre une hauteur faible et l'ajout de fonctionnalités d'une manière simple et peu onéreuse.

Le disjoncteur 14 se situe au plus près du toit du véhicule ferroviaire, ce qui limite l'encombrement du dispositif 10 ainsi que la perte d'aérodynamisme du véhicule ferroviaire. En outre, le dispositif de disjonction 10 est fixé sur le toit du véhicule ferroviaire sans y être intégré, ce qui évite la découpe du toit ou toute autre opération lourde pour installer ledit dispositif 10.

De plus, la disposition des connexions 16A, 16B selon une direction sensiblement normale au plan du support 12 permet d'avoir des connecteurs électriques 48A, 48B facilement accessibles et ainsi d'ajouter des fonctions complémentaires comme un dispositif de mise à terre 140 ou un dispositif de sectionnement 110 additionnel.

Enfin, les connexions 16A, 16B sont amovibles, ce qui facilite leur montage et leur démontage lors d'opérations de maintenance ou pour intégrer des outils de mesures, comme les capteurs 80, 82.

## Revendications

1. Véhicule ferroviaire comprenant un dispositif de disjonction électrique (10) pour véhicule ferroviaire, le véhicule ferroviaire comprenant un toit, le dispositif (10) comprenant :
- un support (12) s'étendant sensiblement selon un plan longitudinal ;
- un disjoncteur (14) comprenant un interrupteur à vide (24), un actionneur (26) et un module d'entrainement (28) reliant l'interrupteur à vide (24) à l'actionneur (26), le disjoncteur (14) s'étendant sensiblement parallèlement au plan longitudinal du support (12) ;
- une première connexion électrique (16A) et une deuxième connexion électrique (16B) propres chacune à relier l'interrupteur à vide (24) à un contact électrique extérieur,
les première et deuxième connexions électriques (16A, 16B) comprenant chacune une première extrémité (44A, 44B) reliée à l'interrupteur à vide (24) et une deuxième extrémité (46A, 46B) située à l'opposé de la première extrémité (44A, 44B) par rapport à l'interrupteur à vide (24), les premières et deuxième connexions (16A, 16B) s'étendant de sorte que pour chacune des première et deuxième connexions (16A, 16B), la distance entre la deuxième extrémité (46A, 46B) et le support (12) est supérieure à la distance entre la première extrémité (44A, 44B) et le support (12), les distances étant mesurées suivant une direction d'élévation (B) sensiblement normale au plan longitudinal du support (12), le support étant formé par au moins une partie du toit du véhicule ferroviaire ou formé par une plaque fixée à au moins une partie du toit du véhicule ferroviaire, **caractérisé en ce que** le disjoncteur (14) s'étend entre le support (12) et les première et deuxième connexions électriques (16A, 16B),
**en ce que** l'ensemble formé par le disjoncteur (14) et les première et deuxième connexions électriques (16A, 16B) présente une hauteur maximale inférieure à 450 millimètres, la hauteur étant mesurée selon la direction d'élévation (B),
et **en ce que** les première et deuxième connexions électriques (16A, 16B) s'étendent d'un premier côté du disjoncteur (14) et le support (12) s'étend d'un deuxième côté du disjoncteur (14), opposé au premier côté.

2. Véhicule selon la revendication 1, dans lequel les première et deuxième connexions électriques (16A, 16B) s'étendent en formant un angle minimal (α) compris entre 45° et 100°, de préférence entre 70° et 90°, avec le plan longitudinal du support (12).

3. Véhicule selon la revendication 1 ou 2, dans lequel les première et deuxième connexions électriques (16A, 16B) s'étendent selon la direction d'élévation (B).

4. Véhicule selon l'une quelconque des revendications 1 à 3, dans lequel les première et deuxième connexions électriques (16A, 16B) comprennent chacune une première portion (210A, 210B) et une deuxième portion (212A, 212B) successives formant entre elles un coude, chaque première portion (210A, 210B) s'étendant suivant la direction d'élévation (B), chaque deuxième portion (212A, 212B) s'étendant suivant un axe longitudinal (A) sensiblement normal à la première portion (210A, 210B) et comportant un connecteur électrique (48A, 48B) destiné à être connecté à un contact électrique extérieur, la distance entre les premières portions (21 0A, 210B) étant inférieure à la distance entre les connecteurs électriques (48A, 48B), les distances étant mesurées suivant l'axe longitudinal (A).

5. Véhicule selon l'une quelconque des revendications 1 à 4, dans lequel le dispositif (10) comprend en outre une enveloppe creuse (60) comportant un boitier (62), dans lequel est disposé le disjoncteur (14), et des manchons (64), dans lesquels s'étendent les première et deuxième connexions électriques (16A, 16B).

6. Véhicule selon la revendication 5, dans lequel les première et deuxième connexions électriques (16A, 16B) comprennent chacune des connecteurs électriques (48A, 48B) s'étendant en saillie en dehors des manchons (64), à l'opposé du disjoncteur (14).

7. Véhicule selon l'une quelconque des revendications 5 et 6, dans lequel les première et deuxième connexions électriques (16A, 16B) et les manchons (64) sont montés de façon amovible sur le boitier (62).

8. Véhicule selon l'une quelconque des revendications précédentes, dans lequel le dispositif (10) comprend en outre un dispositif de mise à terre (140).

9. Véhicule selon l'une quelconque des revendications précédentes, dans lequel le dispositif (10) comprend un dispositif de sectionnement (110) additionnel disposé sur le support (12) et s'étendant sensiblement perpendiculairement au plan du support (12), le dispositif de sectionnement (110) comprenant un bras mobile (114) entre une position fermée, dans laquelle la première connexion électrique (16A) est reliée à un contact électrique extérieur, et une position ouverte, dans laquelle la première connexion électrique (16A) est isolée dudit contact électrique extérieur.

10. Véhicule selon l'une quelconque des revendications précédentes, comprenant en outre un pantographe (130), connecté à la première connexion électrique (16A), et un réseau électrique haute tension, connecté à la deuxième connexion électrique (16B).

## Patentansprüche

1. Schienenfahrzeug, umfassend eine elektrische Trennvorrichtung (10) für ein Schienenfahrzeug, das Schienenfahrzeug umfassend ein Dach, die Vorrichtung (10) umfassend:
- einen Träger (12), der sich im Wesentlichen entlang einer Längsebene erstreckt;
- einen Schutzschalter (14), umfassend Vakuumschalter (24), einen Aktuator (26) und ein Antriebsmodul (28), das den Vakuumschalter (24) mit dem Aktuator (26) verbindet, wobei sich der Schutzschalter (14) im Wesentlichen parallel zu der Längsebene des Trägers (12) erstreckt;
- eine erste elektrische Verbindung (16A) und eine zweite elektrische Verbindung (16B), die jeweils geeignet sind, um den Vakuumschalter (24) mit einem externen elektrischen Kontakt zu verbinden,
die erste und die zweite elektrische Verbindung (16A, 16B) jeweils umfassend ein erstes Ende (44A, 44B), das mit dem Vakuumschalter (24) verbunden ist, und ein zweites Ende (46A, 46B), das sich in Bezug auf den Vakuumschalter (24) gegenüber dem ersten Ende (44A, 44B) befindet, wobei sich die erste und die zweite Verbindung (16A, 16B) so erstrecken, dass für jede von der ersten und der zweiten Verbindung (16A, 16B) der Abstand zwischen dem zweiten Ende (46A, 46B) und dem Träger (12) größer ist als der Abstand zwischen dem ersten Ende (44A, 44B) und dem Träger (12), wobei die Abstände entlang einer Erhebungsrichtung (B) im Wesentlichen senkrecht zu der Längsebene des Trägers (12) gemessen werden, wobei der Träger durch mindestens einen Teil des Dachs des Schienenfahrzeugs gebildet wird oder durch eine Platte gebildet wird, die an mindestens einem Teil des Dachs des Schienenfahrzeugs befestigt ist, **dadurch gekennzeichnet, dass** sich der Schutzschalter (14) zwischen dem Träger (12) und der ersten und der zweiten elektrischen Verbindung (16A, 16B) erstreckt,
dass die durch den Leistungsschalter (14) und die erste und zweite elektrische Verbindung (16A, 16B) gebildete Anordnung eine maximale Höhe von weniger als 450 Millimetern aufweist, wobei die Höhe in der Erhebungsrichtung (B) gemessen wird,
und dass sich die erste und die zweite elektrische Verbindung (16A, 16B) von einer ersten Seite des Schutzschalters (14) erstrecken und sich der Träger (12) von einer zweiten Seite des Schutzschalters (14) gegenüber der ersten Seite erstreckt.

2. Fahrzeug nach Anspruch 1, wobei sich die erste und die zweite elektrische Verbindung (16A, 16B) unter einem minimalen Winkel (a) zwischen 45° und 100°, vorzugsweise zwischen 70° und 90°, zu der Längsebene des Trägers (12) erstrecken.

3. Fahrzeug nach Anspruch 1 oder 2, wobei sich die erste und die zweite elektrische Verbindung (16A, 16B) entlang der Erhebungsrichtung (B) erstrecken.

4. Fahrzeug nach einem der Ansprüche 1 bis 3, wobei die erste und die zweite elektrische Verbindung (16A, 16B) jeweils einen ersten Abschnitt (210A, 210B) und einen zweiten Abschnitt (212A, 212B) umfassen, die aufeinander folgen und untereinander einen Bogen bilden, wobei sich jeder erste Abschnitt (210A, 210B) entlang der Erhebungsrichtung (B) erstreckt, jeder zweite Abschnitt (212A, 212B) sich entlang einer Längsachse (A) im Wesentlichen senkrecht zu dem ersten Abschnitt (210A, 210B) erstreckt und einen elektrischen Verbinder (48A, 48B) umfasst, der mit einem externen elektrischen Kontakt verbunden werden soll, wobei der Abstand zwischen den ersten Abschnitten (210A, 210B) kleiner ist als der Abstand zwischen den elektrischen Verbindern (48A, 48B), wobei die Abstände entlang der Längsachse (A) gemessen werden.

5. Fahrzeug nach einem der Ansprüche 1 bis 4, wobei die Vorrichtung (10) ferner ein hohles Gehäuse (60) umfasst, umfassend einen Kasten (62), in dem der Schutzschalter (14) angeordnet ist, und Hülsen (64), in denen sich die erste und die zweite elektrische Verbindung (16A, 16B) erstrecken.

6. Fahrzeug nach Anspruch 5, wobei die erste und die zweite elektrische Verbindung (16A, 16B) jeweils elektrische Verbinder (48A, 48B) umfassen, die sich hervorstehend aus den Hülsen (64) gegenüber dem Schutzschalter (14) erstrecken.

7. Fahrzeug nach einem der Ansprüche 5 oder 6, wobei die erste und die zweite elektrische Verbindung (16A, 16B) und die Hülsen (64) abnehmbar an dem Gehäuse (62) montiert sind.

8. Fahrzeug nach einem der vorherigen Ansprüche, wobei die Vorrichtung (10) ferner eine Erdungsvorrichtung (140) umfasst.

9. Fahrzeug nach einem der vorherigen Ansprüche, wobei die Vorrichtung (10) eine zusätzliche Trennvorrichtung (110) umfasst, die auf dem Träger (12) angeordnet ist und sich im Wesentlichen senkrecht zu der Ebene des Trägers (12) erstreckt, wobei die Trennvorrichtung (110) einen beweglichen Arm (114) zwischen einer geschlossenen Position, in der die erste elektrische Verbindung (16A) mit einem externen elektrischen Kontakt verbunden ist, und einer offenen Position, in der die erste elektrische Verbindung (16A) von dem externen elektrischen Kontakt isoliert ist, umfasst.

10. Fahrzeug nach einem der vorherigen Ansprüche, ferner umfassend einen Stromabnehmer (130), der mit der ersten elektrischen Verbindung (16A) verbunden ist, und ein Hochspannungsnetz, das mit der zweiten elektrischen Verbindung (16B) verbunden ist.

## Claims

1. Rail vehicle comprising an electrical disconnecting device (10) for a rail vehicle, the rail vehicle comprising a roof, the device (10) comprising:
- a support (12) extending substantially along a longitudinal plane;
- a circuit breaker (14) comprising a vacuum switch (24), an actuator (26) and a drive module (28) connecting the vacuum switch (24) to the actuator (26), the circuit breaker (14) extending substantially parallel to the longitudinal plane of the support (12);
- a first electrical connection (16A) and a second electrical connection (16B) that are each able to connect the vacuum switch (24) to an outside electrical contact,
the first and second electrical connections (16A, 16B) each comprising a first end (44A, 44B) connected to the vacuum switch (24) and a second end (46A, 46B) located opposite the first end (44A, 44B) relative to the vacuum switch (24), the first and second connections (16A, 16B) extending such that for each of the first and second connections (16A, 16B), the distance between the second end (46A, 46B) and the support (12) is greater than the distance between the first end (44A, 44B) and the support (12), the distances being measured along an elevation direction (B) substantially normal to the longitudinal plane of the support (12), the support (12) being formed by at least part of the roof of the rail vehicle or formed by a plate fastened to at least part of the roof of the rail vehicle,
**characterized in that** the circuit breaker (14) extends between the support (12) and the first and second electrical connections (16A, 16B),
**in that** the assembly formed by the circuit breaker (14) and the first and second electrical connections (16A, 16B) has a maximum height of less than 450 millimeters, the height being measured along the elevation direction (B), and
**in that** the electrical connections (16A, 16B) extend on a first side of the circuit breaker (14) and the support (12) extends on a second side of the circuit breaker (14), opposite the first side.

2. Vehicle according to claim 1, wherein the first and second electrical connections (16A, 16B) extend by forming a minimum angle (α) of between 45° and 100°, preferably between 70° and 90°, with the longitudinal plane of the support (12).

3. Vehicle according to claim 1 or 2, wherein the first and second electrical connections (16A, 16B) extend in the elevation direction (B).

4. Vehicle (10) according to any one of claims 1 to 3, wherein the first and second electrical connections (16A, 16B) each comprise a first portion (210A, 210B) and a second (212A, 212B) successive portion that form a bend between them, each first portion (210A, 210B) extending along the elevation direction (B), each second portion (212A, 212B) extending along a longitudinal axis (A) substantially normal to the first portion (210A, 210B) and including an electrical connector (48A, 48B) intended to be connected to an outside electrical contact, the distance between the first portions (210A, 210B) being smaller than the distance between the electrical connectors (48A, 48B), the distances being measured along the longitudinal axis (A).

5. Vehicle according to any one of claims 1 to 4, further comprising a hollow enclosure (60) including a housing (62), in which the circuit breaker (14) is arranged, and sleeves (64), in which the first and second electrical connections (16A, 16B) extend.

6. Vehicle according to claim 5, wherein the first and second electrical connections (16A, 16B) each comprise electrical connectors (48A, 48B) protruding outside the sleeves (64), opposite the circuit breaker (14).

7. Vehicle according to any one of claims 5 and 6, wherein the first and second electrical connections (16A, 16B) and the sleeves (64) are mounted removably on the housing (62).

8. Vehicle according to any one of the preceding claims, further comprising a grounding device (140).

9. Vehicle according to any one of the preceding claims, comprising an additional sectioning device (110) arranged on the support (12) and extending substantially perpendicular to the plane of the support (12), the sectioning device (110) comprising an arm (114) movable between a closed position, in which the first electrical connection (16A) is connected to an outside electrical contact, and an open position, in which the first electrical connection (16A) is insulated from said outside electrical contact.

10. Vehicle according to any one of the preceding claims, further comprising a pantograph (130), connected to the first electrical connection (16A), and a high-voltage electrical system, connected to the second electrical connection (16B).
